(19) Europäisches Patentamt
European Patent Office
Office européen des brevets

(11) EP 0 655 465 B1

(12) EUROPÄISCHE PATENTSCHRIFT

(45) Veröffentlichungstag und Bekanntmachung des Hinweises auf die Patenterteilung:
30.07.1997 Patentblatt 1997/31

(51) Int Cl.⁶: **C08F 6/00**, C08F 6/10

(21) Anmeldenummer: 94118090.3

(22) Anmeldetag: 17.11.1994

(54) **Verfahren zum Beseitigen restflüchtiger Anteile aus Polyacrylatschmelzen**

Process for removing volatile residues from polyacrylate melts

Procédé pour éliminer des résidus volatiles de polyacrylates fondues

(84) Benannte Vertragsstaaten:
BE CH DE ES FR GB IT LI NL SE

(30) Priorität: 25.11.1993 DE 4340136

(43) Veröffentlichungstag der Anmeldung:
31.05.1995 Patentblatt 1995/22

(73) Patentinhaber: BASF Aktiengesellschaft
67063 Ludwigshafen (DE)

(72) Erfinder:
• **Barwich, Jürgen, Dr.**
**D-67434 Neustadt (DE)**
• **Aydin, Oral, Dr.**
**D-68165 Mannheim (DE)**
• **Erhardt, Ulrich, Dr.**
**D-68526 Ladenburg (DE)**
• **Holtrup, Walter**
**D-67227 Frankenthal (DE)**

(56) Entgegenhaltungen:
EP-A- 0 584 926          US-A- 3 987 235
US-A- 4 710 563

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Verfahren zum Beseitigen restflüchtiger Anteile aus Polyacrylatschmelzen.

Polyacrylatschmelzen werden beispielsweise einerseits als Weichharze zur Plastifizierung von Klebrohstoffen und Lackrohstoffen und andererseits als Rohstoffbasis für die neue Generation der UV-vernetzbaren Acrylat-Schmelzhaftklebstoffe eingesetzt.

Eine wesentliche Voraussetzung für die Verwendbarkeit der Polyacrylatschmelzen ist ein extrem niedriger Anteil an restflüchtigen Anteilen, beispielsweise Restlösemittel, Restmonomere und Verunreinigungen. Dies gilt insbesondere für die zuletzt genannten UV-vernetzbaren Schmelzhaftklebstoffe. Gerade bei der Verwendung in medizinischen Produkten, beispielsweise Hautpflastern, ist ein extrem niedriger Anteil an migrierenden Substanzen zwingende Voraussetzung. Aber auch beim Schmelzauftrag der heutigen sehr schnell laufenden Beschichtungsmaschinen (Bandgeschwindigkeit bis 600 m/min) summiert sich ein hoher Anteil an restflüchtigen Anteilen schnell auf und macht besondere technische Aufwendungen zu deren Abfuhr erforderlich.

Die Herstellung der Polyacrylatschmelzen kann man in drei Phasen einteilen. Der erste Schritt ist die Polymerisation in Substanz oder Lösung. Danach erfolgt im zweiten Schritt die Lösemittelabtrennung oder ein Restmonomerstrippen. Dem schließt sich die Produktabfüllung über beispielsweise einen Zahnradpumpenaustrag an.

Die Polymerisation wird in an sich üblicher Weise in einer Polymerisationsapparatur, bestehend aus einem Polymerisationskessel, der im allgemeinen mit einem handelsüblichen Rührer, mehreren Zulaufgefäßen, Rückflußkühler und Heizung/Kühlung versehen ist und für das Arbeiten in Inertgasatmosphäre und Über- bzw. Unterdruck ausgerüstet ist, durchgeführt.

Für die Lösemittelabtrennung (Abdampfen des Lösemittels unter Zurückbehaltung der Polyacrylatschmelze) bieten sich sehr verschiedene technische Verfahren an. Hier sei zuerst die "klassische" Kesseldestillation erwähnt. Weitere übliche Verfahren sind aber auch die Verwendung eines Fallfilmverdampfers, die Strangentgasung oder die Restentgasung im Extruder. Eine sehr umfassende Zusammenstellung verschiedener Abdampfmethoden kann man in der Buchbandreihe: Kunststofftechnik "Entgasen beim Herstellen und Aufbereiten von Kunststoffen", Herausgeber: Verein Deutscher Ingenieure, VDI Gesellschaft Kunststofftechnik, VDI Verlag, 1992, nachlesen.

Aus den obengenannten Gründen besteht ein Bedarf die restflüchtigen Anteile auf ein Minimum abzusenken.

Überraschenderweise wurde nun gefunden, daß der Anteil an restflüchtigen Bestandteilen auf deutlich unter 100 ppm gesenkt werden kann, wenn Schleppmittel wie Wasserdampf, Stickstoff, Argon, $CO_2$ gegen Ende der Destillation unter Vakuumbedingungen in die heiße Polyacrylat-Schmelze gepreßt und anschließend gemeinsam mit den restflüchtigen Anteilen abgezogen werden. Eine weitere deutliche Verbesserung wird erreicht, wenn gleichzeitig eine Optimierung der Polymerdurchmischung und eine Oberflächenvergrößerung realisiert wird. Dies geschieht durch Umpumpen der Polyacrylatschmelze mittels einer Zahnradpumpe und einem Bypaß.

Als besonders günstig erweist sich der Wasserdampf als Schleppmittel, der vorteilhafterweise direkt in den Bypaß eingespeist wird. Dabei ist zu beachten, daß die Kesselinnentemperatur sowie die Bypaßinnentemperatur permanent über 100°C liegen, d.h. der Wasserdampf darf nicht kondensieren.

Grundsätzlich existiert eine Vielzahl von Verfahren zur Abtrennung restflüchtiger Anteile aus Polymer-Schmelzen. Eine wirtschaftliche Entgasung von höherviskosen Kunststoff-Schmelzen geschieht beispielsweise durch Strangentgasen oder Behandlung der Produkte im Entgasungsextruder. Beide Verfahren haben ihre spezifischen Nachteile. Während bei der Strangentgasung häufig die Verstopfung der Röhrenbündel problematisch ist (Stippen, Gelkörper, Verbackungen), liegen die Nachteile bei der Extruderentgasung, einerseits in der hohen Scherung der Polymer-Schmelze andererseits aber auch im erhöhten Platzbedarf dieser Entgasungseinrichtung sowie im sehr hohen Investitionsaufwand. Ein Überblick ist der Bundbandreihe: Kunststofftechnik "Entgasen beim Herstellen und Aufbereiten von Kunststoffen", Herausgeber: Verein Deutscher Ingenieure, VDI Gesellschaft Kunststofftechnik, VDI Verlag 1992, zu entnehmen. Wasserdampf als Schleppmittel wird hier nur in den Systemen Polystyrol bzw. LDPE und PE-Copolymeren in Kombination mit der Extruderentgasung beschrieben.

Der Restmonomergehalt in Polyacrylatschmelzen wird im allgemeinen über die sogenannte chemische Desodorierung reduziert. Über die Zugabe einer erhöhten Peroxidkonzentration zum Ende der Polymerisation bei erhöhter Temperatur wird eine recht gute Auspolymerisation erzielt. Nachteile dieses Verfahrens sind die unkontrolliert erfolgenden Pfropfreaktionen, die zur Stippen- und Gelkörperbildung führen. Besonders problematisch ist dieser Effekt beim Einsatz derartiger Polyacrylatschmelzen in hochtransparenten Klarlacken. Der chemischen Desodorierung von Polyacrylatschmelzen erfolgt die Lösemittelabtrennung im allgemeinen durch ein übliches Abdampfen im Reaktionskessel.

Die Entfernung von Lösemitteln bzw. Restmonomeren aus Polyacrylatschmelzen durch Wasserdampfdestillation im Vakuum ist in dem Chemical Abstract 100 (14) beschrieben (Verfahren von Butaciu, Sirbu, Eivnic, Jacob, Tataru, Doina, Berea). Das Verfahren betrifft allerdings wäßrige Suspensionspolymerisate, d.h. Wasser ist von vornherein präsent (übliches Desodorierverfahren von Polymerdispersionen).

Gemäß dem Aufgezeigten liegt die Aufgabe demzufolge darin ein Verfahren zum Beseitigen restflüchtiger Anteile in Polyacrylatschmelzen bereitzustellen, bei dem die genannten Nachteile vermieden werden.

Diese Aufgabe wird erfindungsgemäß dadurch gelöst, daß das Abdampfen der flüchtigen Anteile im Vakuum erfolgt, Schleppmittel gegen Ende der Destillation bei Temperaturen von über 100°C den Schmelzen zugeführt werden und die Schmelzen gleichzeitig umgepumpt werden, wobei das Schleppmittel direkt in den Umpumpkreis eingespeist wird.

Weitere Merkmale des erfindungsgemäßen Verfahrens sind Gegenstand der Unteransprüche.

Die wesentlichen erfindungsgemäßen Merkmale werden nachstehend detailliert beschrieben und in Zeichnungen und anhand von Beispielen erläutert.

Die Polymerisation wird in einer Polymerisationsapparatur, bestehend aus einem Polymerisationskessel, der mit einem handelsüblichen Rührer, mehreren Zulaufgefäßen, Rückflußkühler, Heizung und Kühlung sowie dem Umpumpkreis mit Wasserdampfeinlaß versehen ist, durchgeführt. Die Polymerisationskessel haben ein Volumen von 10 l - 20m$^3$ bevorzugt 10 l - 10 m$^3$ und sind ausgerüstet für das Arbeiten unter Intergasatmosphäre sowie für Überdruck und Vakuum.

Zur Herstellung der Acrylesterhomo- oder Copolymerisate können die üblichen Verfahren der radikalischen Polymerisation in Wasser oder Lösung angewandt werden. Die Polymerisation wird meist bis zu einem Umsatz der Monomeren von über 80 %, bevorzugt von über 90 %, ganz besonders bevorzugt von über 99 %, durchgeführt.

Um die Reaktionsmischung bestehend aus Monomeren und dem Initiator in der Vorlage zu vermischen, können alle bekannten Rührerarten eingesetzt werden.

Die Copolymerisate werden bei Temperaturen von 20 bis 150°C, vorzugsweise bei Temperaturen im Bereich von 70 bis 120°C und Drucken von 0,1 bis 100 bar, bevorzugt bei 1 bis 10 bar, in Gegenwart von 0,01 bis 10 Gew.-% an Peroxiden oder Azostartern als Polymerisationsinitiatoren, bezogen auf die Monomeren und in Gegenwart von 0 bis 200 Gew.-% an indifferenten Lösungsmitteln, bevorzugt 5 bis 25 Gew.-%, bezogen auf die Monomeren, d.h. durch Lösungs- oder Substanzpolymerisation hergestellt.

Als Lösungsmittel werden vorzugsweise solche eines Siedebereichs von 50 bis 150°C verwendet, beispielsweise Kohlenwasserstoffe wie Benzol, Toluol, o-, m-, p-Xylol, sowie Benzine, die vorzugsweise einen Siedebereich von 60 bis 120°C haben. Des weiteren Alkohole wie Methanol, Ethanol, Propanol, Butanol, Isobutanol, Ketone wie Aceton, Methylethylketon, Methylisobutylketon, Nitrile wie Acetonitril und Benzonitril oder Gemische aus den genannten Lösemitteln. Bevorzugt sind Lösemittel wie Toluol, Isobutanol und Errigsäureethylester und Mischungen daraus.

Als Polymerisationsinitiatoren sind Peroxide wie beispielsweise Acylperoxide wie Benzoylperoxid, Dilauroylperoxid, Didecanoylperoxid, Isononanoylperoxid, Alkylester wie tert.-Butyl-tert.-pivalat, tert.-Butyl-per-2-ethylhexanoat, tert.-Butyl-per-maleinat, tert.-Butyl-per-isononanoat, tert.-Butyl-per-benzoat, tert.-Amylper-2-ethylhexanoat, Dialkylperoxide wie Dicumylperoxid, tert.-Butylcumylperoxid, Di-tert.-Butyl-peroxid und Peroxodicarbonate einsetzbar.

Desweiteren können als Initiatoren Azostartern wie beispielsweise 2,2'-Azobisisobutyronitril, 2,2'-Azobis(methylisobutyrat) oder 2,2'-Azobis(2,4-dimethylvaleronitril) Verwendung finden.

Als Monomere können vier Gruppen (a - d) Verwendung finden:

a) Als Monomere können die üblichen monoolefinisch ungesättigten 3- bis 24-C-Atome enthaltenden Monocarbonsäureester, insbesondere Ester der Acryl- und Methacrylsäure verwendet werden. Von besonderer Bedeutung als Monomere sind die Acryl- und Methacrylsäureester von 1- bis 12-C-Atome enthaltenden Alkanole, wie Methylacrylat, Ethylacrylat, Propylacrylat, Isopropylacrylat, N-Butylacrylat, Isobutylacrylat, Isoamylacrylat, 2-Ethylhexylacrylat, Isoocrylacrylat und -methacrylat, Methylmethacrylat sowie Decylacrylat und -methacrylat und Dodecylacrylat bzw. -methacrylat.

b) Monomere wie $\alpha,\beta$-monoolefinisch ungesättigte 3- bis 6-C-Atome enthaltende Mono- oder Dicarbonsäuren. Beispielsweise Acrylsäure, Methacrylsäure, Itaconsäure, Fumarsäure und/oder Maleinsäure. Desweiteren die Anhydride monoolefinisch umgesättigter Dicarbonsäuren wie Maleinsäureanhydrid und Itaconsäureanhydrid.

c) Reaktive Monomere wie Acrylamid und Methacrylamid, Tetrahydrofurfuryl(meth)acrylamid, Diacetonacrylamid, Hydroxyalkyl(meth)acrylate, wie 2-Hydroxyethyl(meth)acrylat und 4-Hydroxybutyl(meth)acrylat. Desweiteren auch Monomere, die fotoreaktive Gruppen tragen, z.B. N-(Acrylamidomethyl)-benzophenon-4-carbonsäureamid, 4-Acryloxybutylcarbonatobenzophenon oder 2-Methacryloxyethylencarbonatobenzophenon.

d) Monomere wie N-Vinylpyrrolidon und N-Vinylformamid, Acrolein, Methacrolein, Isobuten, Butadien, Isopren, Vinylmethylether, Vinylisobutylether, Vinylpyrridin, Styrol und Methylstyrol, Monomere wie Vinylcaprolactam und Monomere wie z.B. Tetrahydrofururyl-2-acrylat und -methacrylat. Von besonderer Bedeutung sind auch die Vinylester von Carbonsäuren, die 1 bis 18 C-Atome enthalten, wie z.B. Vinylacetat oder Vinylpropionat.

Die Monomeren können als reine Stoffe, als Gemische mit den anderen Monomeren oder als Lösungen in geeigneten Lösemitteln dem Reaktionsgemisch zugeführt werden. Die einzelnen Monomeren können über separate Zulaufleitungen oder gemeinsam über ein Geweih in den Kessel geführt werden.

Für die Durchführung der Polymerisation können dem Reaktionsgemisch auch den Polymerisationsgrad senkende Verbindungen, sogenannte Polymerisationsregler zugesetzt werden, beispielsweise Mercaptane wie Mercaptoethanol, Mercaptobernsteinsäure, 3-Mercaptopropyltrimethoxysilan oder Dodecylmercaptan.

Für eine erfolgreiche Nachpolymerisation wird die Polymer-Schmelze oder Lösung nach Initiator- und Monomerzulaufende einige Stunden auf Siedehitze gebracht. Für das erfindungsgemäße Verfahren ist keine chemische Nachpolymerisation notwendig. Damit entfallen die daraus resultierenden Nachteile.

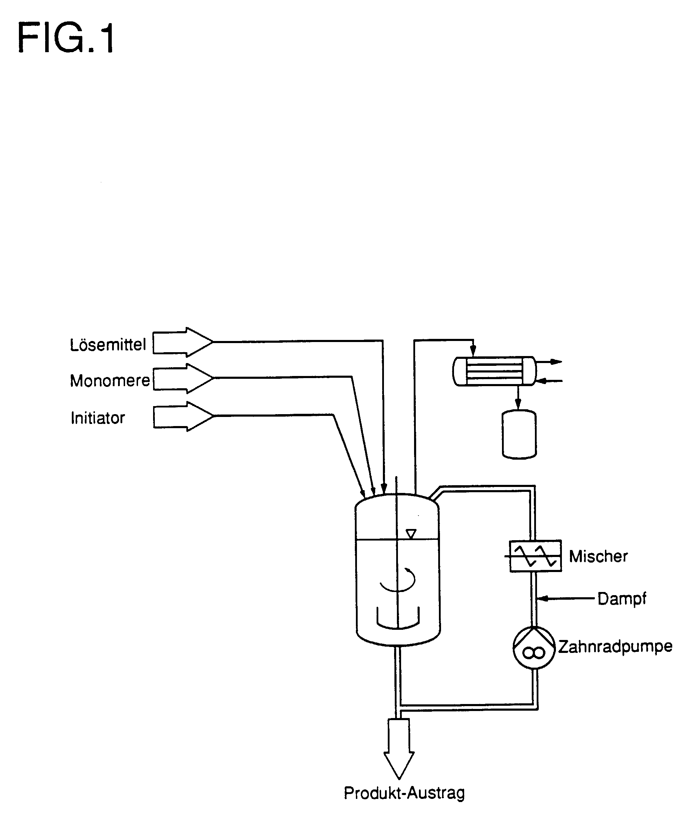

Das Abdampfen des Lösemittels erfolgt vorzugsweise an der Siedehitze im Vakuum. Dabei wird solange abdestilliert, bis kein deutlicher Rückfluß mehr zu beobachten ist. Über Inbetriebnahme der Zahnradpumpe wird anschließend unter Vakuumbedingungen (Wasserringpumpenvakuum) der Kesselinhalt schnell umgepumpt (1 x Kesselinhalt pro 4 Stunden, bevorzugt 1 x Kesselinhalt pro 1 Stunde), wobei gleichzeitig Wasserdampf (2 bis 20 bar, bevorzugt 4 bis 16 bar) eingeleitet wird. Der Wasserdampf soll dabei möglichst innig mit der Polymerschmelze vermengt werden (statischer Mischer, besondere Düsengeometrie im Wasserdampfeinlaß nützlich). Das Gemisch aus restflüchtigen Anteilen und Wasserdampf wird in den oberen Kesselbereich geflasht, wobei ein möglichst großer Anteil der flüchtigen Bestandteile im Vakuum abgezogen wird (siehe Abbildung 1). Dazu bietet sich die Inbetriebnahme einer separaten Wasservorlage an. Das Gemisch aus restflüchtigen Anteilen und Wasser sollte speziell aufbereitet werden. Die Dauer der Wasserdampfbehandlung ist direkt mit dem Gehalt an restflüchtigen Anteilen korrelierbar, d.h. das Wasserdampfstrippen muß über einen derartigen Zeitraum durchgeführt werden, bis die Spezifikationen an Restmonomeren in den verschiedenen Produkten erreicht werden.

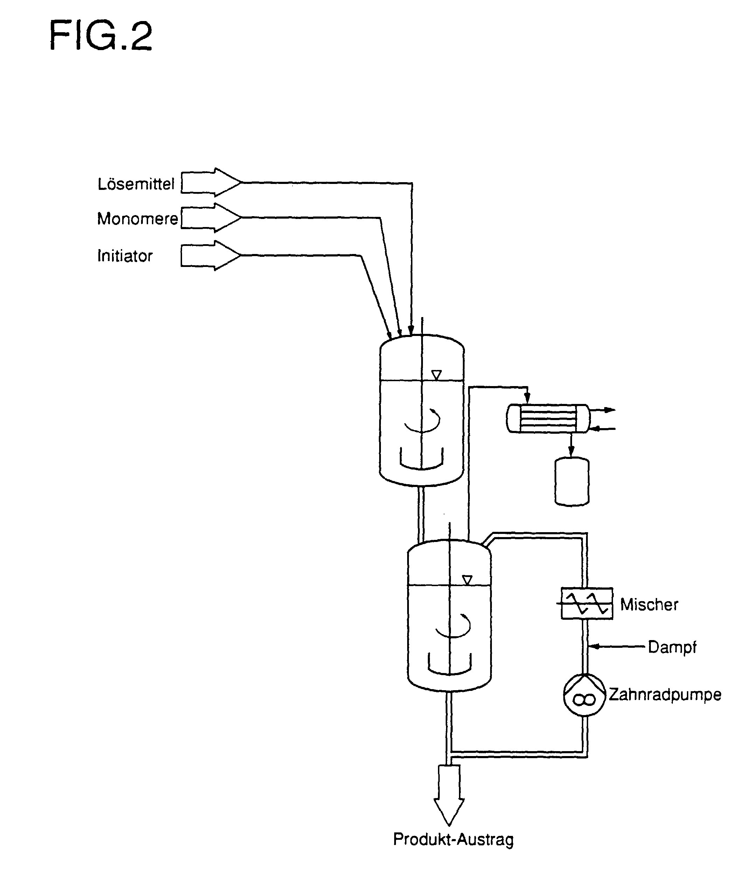

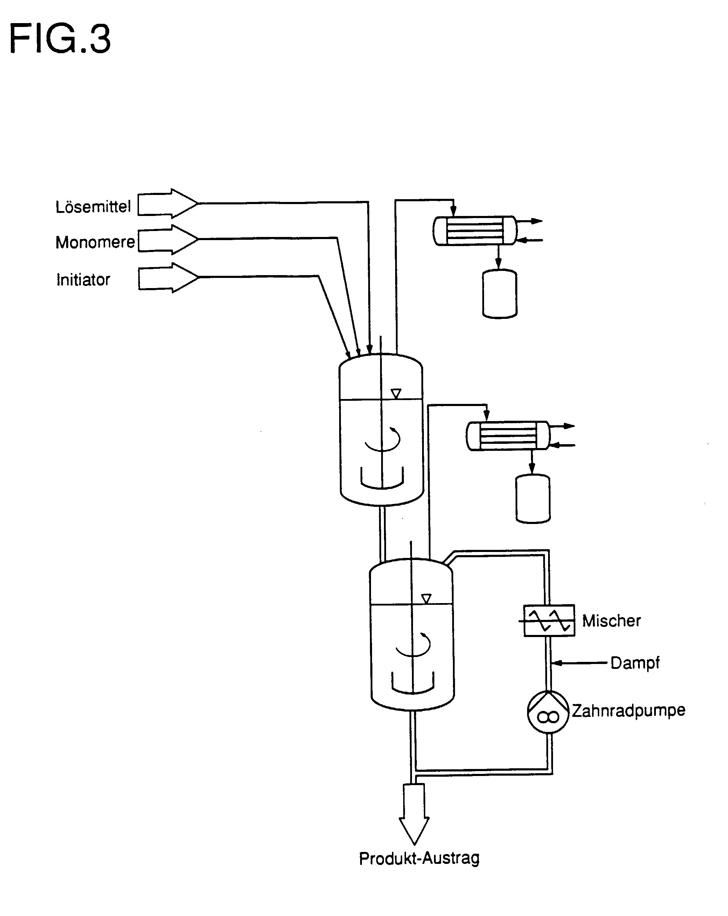

Bei Inbetriebnahme einer 2-Kessel-Anlage können Polymerisation und Destillation ganz (siehe Abbildung 2) oder teilweise (siehe Abbildung 3) entkoppelt werden.

Während in einer Anlage gemäß Abbildung 2 die Destillation komplett im Destillationskessel, ausgerüstet mit Dampfeinlaß und Umpumpkreis, durchgeführt wird, kann in einer Anlage gemäß Abbildung 3 die Destillation teilweise im Polymerisationskessel erfolgen.

Die nach dem erfindungsgemäßen Verfahren hergestellten Copolymerisate haben K-Werte von 10 bis 120, insbesondere 15 bis 80, bestimmt nach DIN 53726 in 1 %iger Lösung in Tetrahydrofuran bei 25°C. Vorzugsweise beträgt der K-Wert 20 bis 60.

Von besonderem Interesse sind Copolymerisate, deren Monomerenzusammensetzung so bemessen ist, daß eine Glasübergangstemperatur von -50 bis 0°C, besonders bevorzugt von -45 bis -5°C erreicht ist. Nach Fox (T.G. Fox, Bull. Am. Phys. Soc. (Ser. II) 1, 123 (1956)) gilt für die Glasübergangstemperatur von Mischpolymerisaten in guter Näherung

$$\frac{1}{Tg} = \frac{X^1}{Tg^1} + \frac{X^2}{Tg^2} + \dots \frac{X^s}{Tg^s}$$

wobei $X^1$, $X^2$, ... $X^s$ die Massenbrüche der Monoemren, 1, 2, ... sind und $Tg^1$, $Tg^2$, ... $Tg^s$ die Glasübergangstemperaturen der jeweils nur aus einem der Monomeren 1, 2, ... oder s aufgebauten Polymeren in Grad Kelvin bedeuten. Die Glasübergangstemperaturen der obengenannten Monomeren sind im wesentlichen bekannt und beispielsweise in J. Brandrup, E.H. Immergut, Polymerhandbook, 1st Ed.J. Wiley, New York 1966 und 2nd Ed.J. Wiley, New York 1975 aufgeführt.

Die nach dem neuen Verfahren hergestellten Copolymerisate können insbesondere als UV-vernetzbare Massen zur Herstellung von Überzügen, Beschichtungen und Imprägnierungen, insbesondere zur Herstellung von Haftklebstoffen, Haftklebefolien, Haftklebebändern, Haftklebeetiketten sowie Prägezangenfolien verwendet werden. Dabei können die Massen in an sich üblicher Weise durch Streichen, Spritzen, Walzen, Rakeln oder Gießen, gegebenenfalls bei erhöhter Temperatur, meist im Temperaturbereich von 20 bis 180°C, auf übliche Substrate aufgebracht werden, beispielsweise auf Papier, Pappe, Holz, Glas, Metalle, Metall- und Kunststoffolien, beispielsweise auf weichgemachtes PVC, Polypropylen, Polyethylen, Polyamiden, Polyestern oder Aluminium und Kupfer. Weiterhin lassen sich auch Vliesstoffe, Fasern, Leder und textile Gewebe beschichten. Die Copolymerisate können auch beispielsweise zur Herstellung von Haftklebeetiketten im Transferauftrag auf Träger wie Papier aufgebracht werden, indem sie zunächst auf abhäsiv beschichteten Trägermaterialien, beispielsweise silikonisiertem Papier aufgebracht und im Falle der UV-vernetzbaren Massen bestrahlt und anschließend beispielsweise auf Papier kaschiert werden. Nach dem Abziehen des silikonisierten Papiers kann die haftklebrige Schicht gegebenenfalls nochmals bestrahlt werden. Als UV-Strahler können die üblichen Strahler, beispielsweise Quecksilbermitteldrucklampen mit einer Strahlungsleistung von 80 bis 240 Watt/cm eingesetzt werden. Die neuen Haftklebemittel können in an sich üblicher Form modifiziert und/oder konfektioniert werden.

Die üblichen klebrigmachenden Harze, beispielsweise Kohlenwasserstoffharze, modifizierte Kolophoniumharze, Pinen und Terpenharze oder Homopolymerisate wie beispielsweise Poly(2-ethylhexylacrylat), Poly(n-butylacrylat), ferner Weichmacher z.B. auf Basis von Mono-, Di- oder Polyesterverbindungen, Pigmente, Stabilisatoren, Styrol-Butadiencopolymere, oder Polyvinylether können den Copolymerisaten in Mengen von bis zu 50 Gew.-% zugesetzt werden.

Polyacrylatschmelzen auf Butylacrylat-Basis dienen vorzugsweise als Weichharze zur Plastifizierung von Klebrohstoffen, Lackrohstoffen und Kunststoffzubereitungen. Diese Produkte zeichnen sich durch besondere Licht- und Alterungsbeständigkeit aus. Eine besondere Voraussetzung für die Einsetzbarkeit dieser Produkte ist die Stippenfreiheit. Insbesondere bei der Verwendung als Lackrohstoff ist diese Eigenschaft für einen hohen Glanz und einen guten Verlauf erforderlich.

Beispiele

Die folgenden Versuche wurden in einem Polymerisationskessel von 400 l Inhalt durchgeführt. Die in den folgenden Beispielen angegebenen Teile und Prozente beziehen sich auf das Gewicht. Die Bestimmung der K-Werte erfolgt nach DIN 53726 in 1 %iger Lösung in Tetrahydrofuran bei 25°C. Die Feststoffgehalte (FG) wurden mit einer Festgehaltbestimmungsapparatur Modell "Mettler EP 16/Mettler PE 360" bestimmt.

Die restlichen Anteile wurden identifiziert per Gaschromatographie (Hewlett Packard Modell 5890) und nach innerer Standardmethode quantifiziert.

Beispiel 1 (Stand der Technik)

Eine Vorlage aus 24 kg Isobutanol, 5 % einer Lösung aus 228 kg Butylacrylat (BA), 12 kg Acrylsäure (As) und 0,8 kg eines copolymerisierbaren Fotoinitiators sowie 5 % einer Lösung aus 0,480 kg tert.-Butyl-per-2-ethylhexanoat und 3 kg Isobutanol wird 10 min bei 100°C anpolymerisiert. Im Verlauf von 7 Std. wird der Rest der Monomermischung und innerhalb von 8 Std. der Rest der Peroxidlösung der Reaktionsmischung zugeführt. Nach Beendigung des Peroxidzulaufs wird die Innentemperatur auf 115°C angehoben und 3 Std. auspolymerisiert. Anschließend werden das Lösemittel und flüchtige Anteile unter Vakuum bei 127 bis 132°C entfernt. Nach dem Erreichen einer Reaktorinnentemperatur von 130°C werden im Vakuum bei < 500 mbar über 3 Std. die restflüchtigen Anteile abdestilliert. Man erhält ein Copolymerisat mit dem K-Wert von 47,3.
Restflüchtige Anteile: Isobutanol: 2300 ppm, BA 1230 ppm, As < 0,02 %.
FG: 99,6 %.

Beispiel 2 (erfindungsgemäß)

Man verfährt wie unter Beispiel 1 angegeben, variiert jedoch die Destillation wie folgt: Nach Erreichen einer Innentemperatur von 130°C, bei einem Vakuum von ca. 500 mbar, wird die Polyacrylatschmelze umgepumpt (Pumpgeschwindigkeit 400 l/Std.). Gleichzeitig wird Dampf mit 16 bar über 2,5 Std. in den Umpumpkreis eingespeist. Anschließend wird wie in Beispiel 1 noch 0,5 St. bei einer Innentemperatur von 130°C destilliert. Man erhält ein Copolymerisat mit dem K-Wert von 47,7.
Restflüchtige Anteile: Isobutanol: 50 ppm, n-BA < 10 ppm, Acrylsäure nicht mehr nachweisbar.
FG: (nach Wasserdampfeinleitung) : 99,9 %.

Beispiel 3 (erfindungsgemäß)

Man verfährt wie unter Beispiel 1 und 2 angegeben. Nach Erreichen einer Innentemperatur von 130°C und einem Vakuum von 500 mbar wird eine Probe gezogen: Restflüchtige Anteile: Isobutanol: 3875 ppm, n-BA: 2542 ppm,
FG: 99,0 %.
Danach werden der Umpumpkreis in Betrieb genommen, über 1 Std. 4 bar Wasserdampf eingeleitet und die restflüchtigen Anteile abdestilliert.
Restflüchtige Anteile: Isobutanol 518 ppm, n-BA 1212 ppm
FG: 99,8 %.
Anschließend wird der Umpumpkreis und die Wasserdampfeinleitung erneut über 1 Std. in Betrieb genommen und eine weitere Probe gezogen.
Restflüchtige Anteile: Isobutanol: < 10 ppm, n-BA 365 ppm
FG: 99,9 %.

Beispiel 4 (Vergleichsbeispiel zu Beispiel 3)

Das Copolymerisat wird wie in Beispiel 3 beschrieben hergestellt mit der Änderung, daß Umpumpkreis und Wasserdampfeinlaß nicht in Betrieb genommen werden. Dafür wird die übliche Kesseldestillation um einen entsprechenden Zeitraum, d.h. um 2 Std. erweitert.
Restflüchtige Anteile: Isobutanol: 2700 ppm, n-BA 1400 ppm
FG: 99,5 %.

Beispiel 5

Eine Vorlage aus 15 kg Toluol, 0,1 kg tert.-Butyl-per-2-ethylhexanoat und 5,0 kg einer Monomermischung aus 95 kg Butylacrylat und 5 kg 2-Hydroxyethylacrylat (HEA) wird 10 min bei 100°C unter Stickstoffatmosphäre anpolymerisiert. Im Verlauf von 4 Std. gibt man den Rest der Monomermischung und gleichzeitig innerhalb von 3,5 Std. eine Lösung von 1,9 kg tert.-Butyl-per-2-ethylhexanoat in 10 kg Toluol bei einer Innentemperatur von 100°C zu der vorgelegten Reaktionsmischung. Nach Beendigung der Monomerzugabe erhöht man die Innentemperatur und rührt 4 Std. bei 115°C nach. Die erhaltene Harzlösung wird zweigeteilt.

Beispiel 5.1 (erfindungsgemäß)

Anschließend werden das Lösemittel und flüchtige Anteile abdestiliert, wobei ab Erreichen einer Innentemperatur von 130°C und einem Vakuum von 500 mbar der Umpumpkreis mit 4 bar Wasserdampfeinlaß in Betrieb genommen wird. Nach 2 Std. Wasserdampfstrippen wird eine Probe gezogen.
Restflüchtige Anteile: Toluol: < 10 ppm, n-BA: < 10 ppm, 2-HEA: < 10 ppm,
FG: 99,9 %.

Beispiel 5.2 (Vergleichsbeispiel)

Lösemittel und flüchtige Anteile werden abdestilliert.

Nach Erreichen von 130°C und 500 mbar wird die Destillation über 2 Std. im Kessel fortgesetzt. Dabei wird eine Innentemperatur von 130°C beibehalten. Restflüchtige Anteile: Toluol: 750 ppm, n-BA: 1300 ppm, 2-HEA: 970 ppm,

Man erhält für beide Fälle ein Copolymerisat vom K-Wert 42,3.

## Patentansprüche

1. Verfahren zum Beseitigen restflüchtiger Anteile aus Polyacrylatschmelzen durch Abdampfen der flüchtigen Anteile, dadurch gekennzeichnet, daß das Abdampfen der flüchtigen Bestandteile im Vakuum erfolgt, Schleppmittel gegen Ende der Destillation bei Temperaturen von über 100°C den Schmelzen zugeführt werden und die Schmelzen gleichzeitig umgepumpt werden, wobei das Schleppmittel direkt in den Umpumpkreis eingespeist wird.

2. Verfahren nach Anspruch 1, dadurch gekennzeichnet, daß als Schleppmittel Wasserdampf verwendet wird.

3. Verfahren nach Ansprüchen 1 bis 2, dadurch gekennzeichnet, daß Wasserdampf mit einem Druck von 1 bis 20 bar eingespeist wird.

4. Verfahren nach Ansprüchen 1 bis 3, dadurch gekennzeichnet, daß die Polyacrylat-Schmelze zumindest einmal, bevorzugt mehrmals umgepumpt wird.

5. Verfahren nach Ansprüchen 1 bis 4, dadurch gekennzeichnet, daß die Polymerisation und Destillation in einer 1-Kesselanlage oder einer 2-Kesselanlage durchgeführt wird.

6. Verfahren nach den Ansprüchen 1 bis 5, dadurch gekennzeichnet, daß das Verfahren besonders geeignet ist zur Herstellung von Polyacrylatschmelzen mit Glasübergangstemperaturen von -50 bis 0°C, bevorzugt von -45 bis -5°C.

7. Verfahren nach den Ansprüchen 1 bis 5, dadurch gekennzeichnet, daß das Verfahren besonders geeignet ist zur Herstellung von Polyacrylatschmelzen mit K-Werten von 10 bis 120, bevorzugt von 15 bis 80, besonders bevorzugt von 20 bis 60.

8. Verfahren nach den Ansprüchen 1 bis 5, dadurch gekennzeichnet, daß das Verfahren besonders geeignet ist zur Herstellung von Polyacrylatschmelzen, die als Rohstoffbasis für UV-vernetzbare Schmelzhaftklebstoffe geeignet sind.

9. Verfahren nach den Ansprüchen 1 bis 5, dadurch gekennzeichnet, daß das Verfahren besonders geeignet ist zur Herstellung von Polyacrylatschmelzen, die als Weichharze zur Plastifizierung für Lack- und Klebrohstoffe geeignet sind.

## Claims

1. A process for eliminating volatile residues from polyacrylate melts by evaporating off the volatile components, wherein the volatile constituents are evaporated off under reduced pressure, entraining agents are added to the melts at above 100°C toward the end of the distillation and the melts are simultaneously circulated, the entraining agent being fed directly into the circulation.

2. A process as claimed in claim 1, wherein the entraining agent used is steam.

3. A process as claimed in claim 1 or 2, wherein steam at from 1 to 20 bar is fed in.

4. A process as claimed in any of claims 1 to 3, wherein the polyacrylate melt is circulated at least once, preferably several times.

5. A process as claimed in any of claims 1 to 4, wherein the polymerization and distillation are carried out in a 1-kettle plant or a 2-kettle plant.

6. A process as claimed in any of claims 1 to 5, which is particularly suitable for the preparation of polyacrylate melts having glass transition temperatures of from -50 to 0°C, preferably from -45 to -5°C.

7. A process as claimed in any of claims 1 to 5, which is particularly suitable for the preparation of polyacrylate melts having K values of from 10 to 120, preferably from 15 to 80, particularly preferably from 20 to 60.

8. A process as claimed in any of claims 1 to 5, which is particularly suitable for the preparation of polyacrylate melts which are suitable as a raw material base for UV-crosslinkable hotmelt adhesives.

9. A process as claimed in any of claims 1 to 5, which is particularly suitable for the preparation of polyacrylate melts which are suitable as flexible resins for plasticizing coating and adhesive raw materials.

**Revendications**

1.  Procédé pour éliminer les fractions volatiles résiduaires de masses fondues de polyacrylates par
    évaporation des fractions volatiles, caractérisé par
    le fait que l'évaporation des constituants volatils
    s'effectue sous vide, des agents d'entraînement
    sont ajoutés à la masse fondue vers la fin de la distillation à des températures supérieures à 100°C et
    les masses fondues sont simultanément recyclées
    par pompage, tandis que l'agent d'entraînement est
    introduit directement dans le circuit de recyclage
    par pompage.

2.  Procédé selon la revendication 1, caractérisé par le
    fait qu'on emploie comme agent d'entraînement de
    la vapeur d'eau.

3.  Procédé selon les revendications 1 à 2, caractérisé
    par le fait qu'on introduit de la vapeur d'eau avec
    une pression de 1 à 20 bar.

4.  Procédé selon les revendications 1 à 3, caractérisé
    par le fait que la masse fondue de polyacrylate est
    recyclée par pompage au moins une fois, de préférence plusieurs fois.

5.  Procédé selon les revendications 1 à 4, caractérisé
    par le fait que la polymérisation et la distillation sont
    effectuées dans une installation à 1 cuve ou dans
    une installation à 2 cuves.

6.  Procédé selon les revendications 1 à 5, caractérisé
    par le fait que le procédé est particulièrement approprié pour la préparation de masses fondues de
    polycarylates ayant des températures de transition
    vitreuse de -50 à 0°C, de préférence de -45 à -5°C.

7.  Procédé selon les revendications 1 à 5, caractérisé
    par le fait que le procédé est particulièrement approprié pour la préparation de masses fondues de
    polycarylates ayant des valeurs K de 10 à 120, de
    préférence de 15 à 80, et tout particulièrement de
    20 à 60.

8.  Procédé selon les revendications 1 à 5, caractérisé
    par le fait que le procédé est particulièrement approprié pour la préparation de masses fondues de
    polyacrylates qui conviennent comme base de matière première pour des masses auto-adhésives
    fondues réticulables sous UV.

9.  Procédé selon les revendications 1 à 5, caractérisé
    par le fait que le procédé est particulièrement approprié pour la préparation de masses fondues de
    polyacrylates, qui conviennent comme résines molles de plastification pour matières premières pour
    laques et adhésifs.

# FIG.1

Lösemittel

Monomere

Initiator

Mischer

Dampf

Zahnradpumpe

Produkt-Austrag

# FIG.2

Lösemittel

Monomere

Initiator

Mischer

Dampf

Zahnradpumpe

Produkt-Austrag

# FIG.3

Lösemittel

Monomere

Initiator

Mischer

Dampf

Zahnradpumpe

Produkt-Austrag